# EUROPEAN PATENT APPLICATION

(11) **EP 4 339 396 A1**
(43) Date of publication of application: **20.03.2024**
(21) Application number: 22195718.6
(22) Date of filing: 14.09.2022
(51) Int. Cl.: E04H 1/12, H02J 7/35

(54) **ECO FRIENDLY WELFARE CABIN**

(71) Applicant: Boss Cabins Limited, Bourne Lincolnshire PE10 9HT (GB)
(72) Inventor: WILD, Ian, Bourne, Lincolnshire PE10 9HT (GB)
(74) Representative: Adamson Jones

(57) **Abstract**

There is disclosed provided a self-contained welfare cabin arranged to be powered by renewable energy. The welfare cabin comprises an energy store, typically in the form of batteries, and an electrical system having an alternating current (AC) circuit and a direct current (DC) circuit. An inverter is operatively connected to the energy store and configured to provide AC power to the AC circuit. Electrical appliances are operatively connected to the AC and DC circuits. A plurality of solar panels for renewable energy generation are operatively connected to the electrical system for charging the energy store. A controller arranged to control the supply of power to the appliances based on sensor readings such that the welfare cabin can be devoid of a combustion generator. Appliances are selectively denied power by the controller to preserve power based on occupancy sensors and/or settings applied using a remote device according to the instance of use of the welfare cabin. The inverter may be underrated and the controller may selectively deny power to electrical appliances according to a predetermined hierarchy such that the concurrent power demand is within the capacity of the inverter. The solar panels may be moveable or deployable to maximise the available area for solar generation, e.g. beyond the footprint of the welfare cabin.

## Description

The present invention relates to a welfare cabin, particularly, but not limited to a self-contained, free standing welfare cabins. Such cabins are often used in remote locations or worksites where mains power and/or sewerage connections are unavailable.

Traditionally welfare cabins are supplied with an integral generator set, i.e. a diesel engine generator, to supply off-grid power to electrical appliances within the cabin. There is an ongoing desire to reduce emissions from combustion engines and to find cleaner alternatives for meeting electrical demands. However the electrical system demands for a welfare cabin can vary significantly, meaning that a peak demand can very quickly outstrip the available renewable power and/or any energy reserves. Conventional renewable energy generators (i.e. solar and wind generators) that can be provided in a practical manner on-board a welfare cabin would fail to cope with even a moderate instantaneous electrical system demand.

European Patent EP 1 716 298 discloses certain problems with the use of diesel generators in self-contained cabins, such as noise, fuel consumption and exhaust fumes. As a solution EP 1 716 298 proposes a self-contained lavatory cabin with a solar panel to power electric lights and a burner and heat-exchanger arrangement for air heating in the cabin. The hot air can be used for heating the cabin interior and to heat water for storage in a hot water tank. Simple controls are enabled using an air temperature sensor and an infra-red sensor to detect a person within the cabin. The lights and other electrical components are activated in a stand-by mode when a person is present and air heating is initiated if the internal cabin temperature is below a threshold temperature.

The water closet example of EP 1 716 298 represents a relatively low-energy-consumption unit. Larger welfare cabins have greater energy demands for space heating, water heating, lighting, cooking and powering ancillary electrical appliances. A peak energy demand of a welfare cabin will drain a conventional on-board battery system very quickly to the point that the cabin will be without power for a majority of the usage time, unless a significantly larger battery system is installed. This is impractical for a number of reasons, as well as being costly. Even then, a moderate power consumption for a welfare cabin will typically outstrip a renewable energy generation capacity of the cabin and so, regardless of battery system size, the battery will ultimately run down if power is consumed in the cabin in a conventional manner.

When the inconsistency of renewable energy generation systems is also considered, e.g. due to seasonal variations and immediate weather conditions, this results in conventional renewably charged battery systems being impractical for consistent use. Given that welfare cabins will often need to be used on-site for a period of months, alternative/non-renewable energy sources are relied upon to provide continuous energy availability. However such sources typically increase emissions and add to the carbon footprint of the cabin. They can also significantly increase the frequency of the duty/maintenance cycle for the cabin which adversely affects running costs.

It is an aim of the invention to provide an improved self-contained cabin that resolves or mitigates one more of the above identified problems.

According to a broad aspect of the present invention, there is provided a self-contained welfare cabin comprising: an energy store; an electrical system having an alternating current (AC) circuit and a direct current (DC) circuit; an inverter operatively connected to the energy store and configured to provide AC power to the AC circuit; a plurality of appliances operatively connected to the AC and/or DC circuits; a plurality of solar panels for renewable energy generation, said solar panels being operatively connected to the electrical system for charging the energy store; and a controller arranged to control the supply of power to the appliances, the welfare cabin being devoid of a combustion generator.

All or substantially all of the power consumed by the cabin in use may be supplied by the energy store and/or solar panels. At least 80%, 90%, 95%, 97% or more of the power consumed by the welfare cabin when on site may be supplied by the energy store and/or solar panels.

The controller may monitor the charge level on the energy store and/or the rate of charge/discharge from the energy store. The controller may monitor the power demand, e.g. instantaneous power demand, of the appliances.

The controller may selectively deny power to one or more appliance.

According to a first aspect of the invention, there is provided a self-contained welfare cabin having an energy generation system comprising: an energy store; a renewable energy generator; an alternating current (AC) circuit and a direct current (DC) circuit; an inverter for supplying the AC circuit from the energy store; and a controller configured to control operation of the energy generation system, the controller comprising a communication interface for operative communication with a remote device, the controller configured to receive commands from the remote device to allow modification of one or more operating parameter of the energy generation system.

The operating parameter may comprise one or more threshold for generating an alert based on the operation of the energy generation system.

The welfare cabin may comprise a location determination system, and the controller may be configured to a receive a location parameter from the remote device, the controller determining whether or not the location of the welfare cabin is adheres to said parameter. The location parameter may be a location or geographic area/zone.

The energy generation system may comprise a backup power source configured to charge the battery when the charge thereof falls below a predetermined charge level and the controller may receive commands from the remote device to set or change the predetermined charge level.

According to a second aspect, there is provided a self-contained welfare cabin having an energy generation system comprising: an energy store; a combustion generator; a renewable energy generator; an alternating current (AC) circuit and a direct current (DC) circuit; where the energy store comprises a temperature sensor and a temperature control system to determine if the energy store is within a predetermined temperature range, and if the temperature if outside said predetermined temperature range alter the temperature of the energy store until the energy store is within said temperature range.

The energy stored may be provided in an insulated enclosure.

The temperature control system may be configured to activate in response to a demand to charge or discharge the energy store. The temperature control system may selectively heat/warm the battery only when needed for operation.

According to a third aspect, there is provided a self-contained welfare cabin having an energy generation system comprising: an energy store; a combustion generator; a renewable energy generator; an alternating current (AC) circuit and a direct current (DC) circuit; an inverter operatively connected to the energy store and configured to provide AC power to the AC circuit, the inverter comprising a predetermined power rating; a plurality of appliances provided in or operatively connected to the cabin, the appliances comprising a total power rating; where the total power rating of the appliances is greater than the power rating of the inverter, and the inverter comprises a controller configured to selectively deny power to one or more appliance in the event the power drawn by the appliances is greater than the power rating of the inverter.

Each appliance may be assigned a priority rating. The priority rating of each appliance may be logged/predetermined and accessible to the controller. Power may be denied to a plurality of appliances. One or more appliance may be denied power in accordance with its priority rating. The priority rating may be a hierarchical rating, e.g. where each appliance has a rating according to a predetermined hierarchy applied by the controller.

According to a fourth aspect, there is provided a self-contained welfare cabin having an energy generation system comprising: an energy store; a combustion generator; a renewable energy generator; an alternating current (AC) circuit and a direct current (DC) circuit; a sensing system configured to determine occupancy of the cabin and configured to selectively deactivate one or more electrical appliance in the cabin in the event no occupancy of the cabin is determined.

According to a fifth aspect, there is provided a self-contained welfare cabin having an energy generation system comprising: an energy store; a combustion generator; a renewal energy generator; an alternating current (AC) circuit and a direct current (DC) circuit; where the renewable energy generator is movable between a stowed and a deployed position. Additionally or alternatively, the renewable energy generator may be actuatable in the deployed condition to alter its angular orientation relative to the cabin.

In the deployed position, the renewable energy generator may extend beyond the footprint of the cabin. In the stowed position the renewable energy generator may be within the footprint of the cabin.

The available surface area for solar generation of the renewable energy generator may be increased by movement from the stowed to the deployed condition. In the deployed condition, the area of the renewable energy generator (i.e. one or more solar panels) may be greater than the area of the welfare cabin roof.

The renewable energy generator may be angularly moveable or actuatable. The renewable energy generator may be angularly moveable by folding, tilting or pivoting. In the deployed condition, the renewable energy generator may be selectively angularly adjustable, e.g. to alter the tilt or swivel angle of the renewable generator for solar energy collection. The renewable energy generator may be fixed at a desired angle of tilt/swivel in the deployed condition.

In any aspect of the invention, the welfare cabin may comprise one or more occupancy sensor. The controller may selectively operate or deny power to one or more appliance in dependence upon the occupancy sensor.

In any aspect of the invention, the controller may be configured to transmit a notification or data to the remote device, the data comprising one or more of: the energy store charge level and/or charging/discharging rate; power or total power generation of the combustion and/or renewable generator; a location of the cabin; whether one or more appliance has been deactivated in response to determination the cabin is unoccupied.

In any aspect of the invention, the system may comprise a temperature sensor for the welfare cabin interior. The controller may permit or deny operation of one or more appliance based on the sensed temperature. One or more temperature thresholds may be set or adjusted using the remote device.

The welfare cabin may comprise a backup power supply for supplying power to the electrical system, e.g. for charging the energy store. The backup power supply may comprise a mains power connection or other external power supply. In any of the first to fifth aspects of the invention, the backup power supply may comprise a combustion generator.

The energy store may be provided in an insulated enclosure in the welfare cabin.

The electrical appliance may comprise a water heater, air heater, cooking appliance (e.g. microwave), refrigerator, water pump, one or more light and/or an inverter.

The welfare cabin may comprise a liquid storage tank. The operating parameter used by the controller to permit/deny operation of an appliance may comprise a level/volume of liquid in the storage tank. The storage tank could comprise a waste water (e.g. grey or black water) tank, or a fresh/rain water tank. A command from the remote device could define a threshold liquid level/volume in the storage tank.

The welfare cabin electrical system can typically operate for a majority of its usage time without requiring any backup power source. For example, the self-contained welfare cabin may operate for at least 80%, 85%, 90%, 95%, 97%, 98% or 99% of its operational/occupied use time based solely based on the renewable energy generator and its energy store.

Any optional or essential features described in relation to any one aspect of the invention may be applied to any further aspect, wherever practicable.

Practicable embodiments of the disclosure are described below in further detail, by way of example only, with reference to the accompanying drawings, of which:
**Figure 1** shows a schematic plan view of a water closet cabin layout;
**Figure 2** shows a plan view of a larger welfare cabin layout;
**Figure 3** shows an example schematic electrical system for a cabin;
**Figure 4** shows an example schematic of the control arrangement for a cabin.

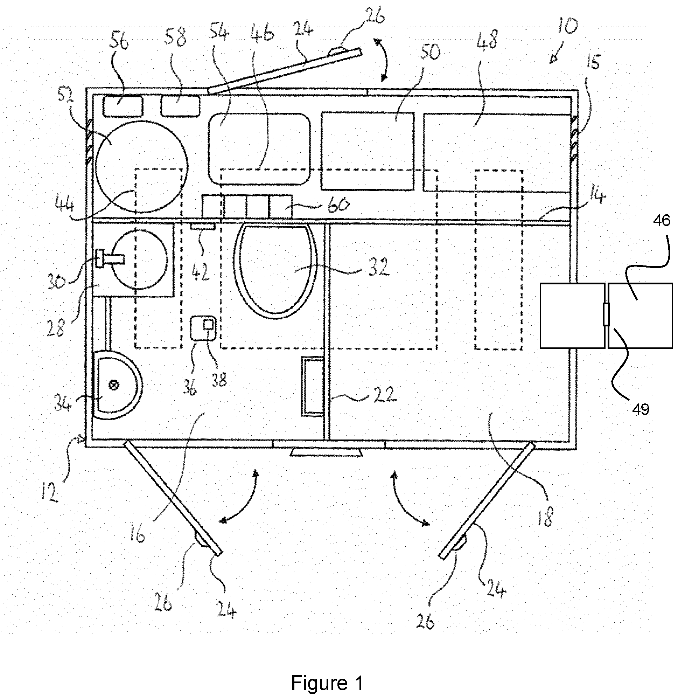

A free-standing welfare cabin according to an example of the present invention is shown schematically in Figure 1 and generally designated 10. The cabin can be provided in any suitable location, for example, in locations without connection to water or electricity mains.

The cabin comprises an outer wall 12 around its perimeter and one or more inner dividing wall 14, which separates the user compartment 16 from an equipment compartment 20. The outer wall 12 provides for a rigid container that is resilient to vandalism. The outer wall may comprise one or more vents 15 to the cabin exterior in any, any combination, or all of the internal compartments.

In the present embodiment, the cabin 10 comprises a water closet (WC) cabin with two user compartments 16 and 18 in a side by side configuration, e.g. separated by a further internal dividing wall 22. However in other examples, a single user compartment 16 can be provided if required.

Each of the user compartments 16, 18 and equipment compartment 20 is provided with a door 24 that opens to the exterior of the cabin 10. The doors 24 each have locks 26 and are designed to be difficult to break into by way of their fitment into the corresponding frame in the outer wall 12, as well as by the nature of the lock 26.

The user compartment 18 may be a copy of the user compartment 16 and so the details of that compartment are not duplicated for simplicity. In other examples, the compartment 18 could comprise a washing compartment, e.g. instead of a WC compartment. The user compartment 16 comprises a sink 28 with a water dispenser 30 (e.g. a tap or hot wash unit) to provide hot or cold water and a toilet 32. The compartment may additionally comprise a urinal 34.

Electrical components within the user compartment comprise a light 36, personnel sensor 38 and, optinally, a heater 40. The personnel sensor 38 typically comprises a proximity sensor and/or movement sensor of a known type. An additional sensor 42 is provided in the cabin in the form of a light sensor. The light sensor senses the level of ambient light within the compartment 16.

The air heater 40 may comprise one or more infra-red heating panel (i.e. a radiative heating panel) but could additionally or alternatively comprise an electrical fan heater of conventional type or another convective heater. A skylight 44 (shown in phantom) may be provided in the roof of the compartment 16 so as to allow entry of ambient light into the compartment interior.

A solar panel 46 (shown in phantom) is mounted on the roof of the WC cabin 10. The solar panel is mounted adjacent the skylight 44 in this example, e.g. between two skylights. A plurality of solar panels may be provided depending on the available area for mounting. Solar panels may cover a majority, or all, of the roof area of the cabin. For example, greater than or equal to 70% of the roof area may be cover; preferably, greater than or equal to 80%.

In other examples, one or more skylight is repositioned to avoid impacting on the available roof area for solar panels 46. One or more skylight may be provided between adjacent solar panels, in a void beneath a solar panel and/or in an upper region of a side wall of the cabin, rather than in the roof.

The solar panels may be mounted co-planar with the roof of the cabin normally (i.e. horizontally in use). In some examples, the solar panel(s) could additionally or alternatively be fitted to the side of the outer wall 12.

In some embodiments, the one or more solar panel 46 is angled from the horizontal. The panel 46 may be angled at an optimum angle for solar collection for a particular location. In some embodiments, the solar panel 46 may be mounted via a mechanism to allow adjustment of the angle thereof. As the optimum angle varies due to time of year, the mechanism will be capable of placing the panels at the most efficient angle for a given time. The adjustable mechanism comprises pivot or other rotatable mechanism to provide rotation of the panel 46. For example, the panel(s) 46 can both pivot about a horizontal axis and swivel about a vertical axis.

Additionally or alternatively, solar panels 46 are movable between one or more position. The solar panels 46 may be linear movable and/or foldable (i.e. angularly moveable) into /from a deployed condition. For example, the solar panels 46 are slidably movable with respect the cabin. The solar panel 46 may slide out from the roof and/or side walls of the cabin. In some embodiments, the solar panels 46 may fold out from the cabin (e.g. the roof or side walls thereof). In a retracted position, the solar panels 46 may lie flat against the cabin 46 and/or against another portion of the panel 46 (i.e. the panel 46 can fold into itself). The panel 46 may be attached to the cabin and/or one another via a hinge 49. The panel 46 max extend beyond the outer footprint or boundary of the cabin (i.e. extends outwardly therefrom). This increases the effective light collection area.

In some embodiment, the cabin comprises an auxiliary solar panel 46. The auxiliary solar panels are separate to the cabin (i.e. not attached thereto). The panel 46 are operatively connected to the cabin to provide power thereto (e.g. via a cable or the like).

One or more external light 47 is provided on the external side of the outer wall 20 or roof. The external light 47 may have a proximity/movement sensor. Alternatively, the external sensor could be provided separately.

In some embodiments, the cabin comprises a wind power generator. Typically, this comprises a wind turbine, however, it can be appreciated that any suitable arrangement may be provided.

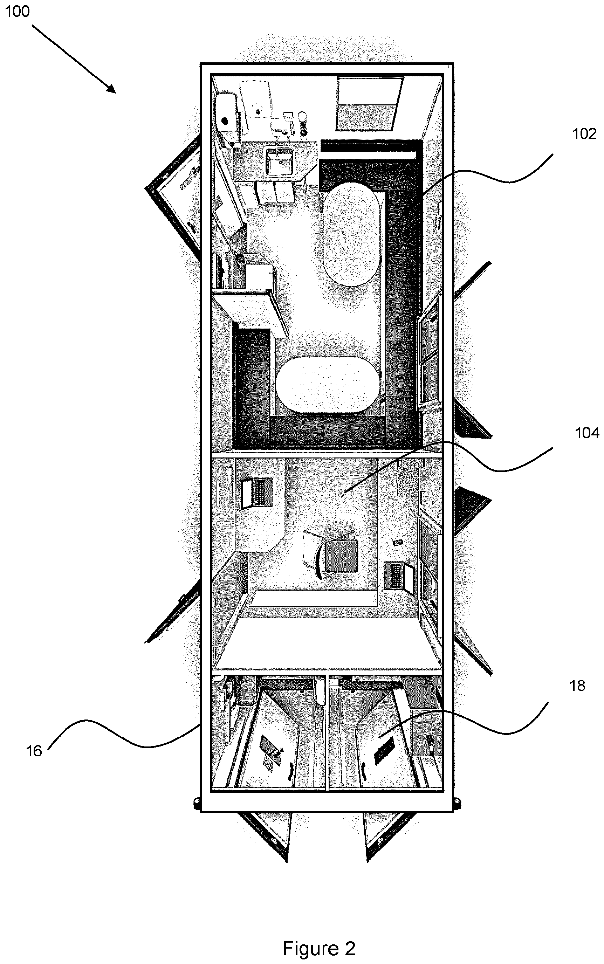

A shown in figure 2, the cabin unit 10 could have further user compartments if desired, e.g. in the form of a larger welfare cabin 100. In this example, the welfare cabin 100 comprises the WC compartment(s) 16 and/or 18 described above at one end of the cabin 100. Instead of providing two WC compartments, the compartment 18 could be used as the equipment compartment 20 described above. Other compartments of the cabin 100 comprise a seating area and/or kitchenette/galley 102 and a separate office 104 in addition to the toilet facilities disclosed herein, each separated by internal walls. Each compartment has an external door and may have windows/shutters. The additional compartment 102 provides further washing facilities, e.g. in the form of a sink and water heater as well as further electrical appliances, such as a cooker/electric hob/microwave oven and/or kettle. Further electrical sockets are provided in the compartments 102 and 104. In some embodiments, the kitchenette may comprise a canteen or seating area. In some embodiments, the cabin comprises a drying room (e.g. to dry wet clothes).

The cabins of Figures 1 and 2 are just examples of the different types of welfare cabins available and it will be understood that a variety of welfare cabin layouts may be accommodated as may be provided to suit different living and working requirements for different numbers of people.

The equipment compartment 20 houses the following:
- A generator set 48 (optional);
- An electrical energy store 50, e.g. in the form of a battery or battery bank;
- A fresh water tank 52;
- A waste water tank 54
- A water pump 56;
- A water heater 58; and
- An electrical control system 60

There may additionally be provided an optional fuel-based heater, such as a diesel heater.

Whilst the waste water tank 54 is described as being within the equipment compartment 20, it could be located beneath a floor of the WC, e.g. beneath the user and/or equipment compartment.

The generator set 48 typically may not be needed but may be used depending on the renewable energy generation capacity of the cabin and the level of cabin usage (i.e. the typical electrical system demands of the cabin in use). Where used, the generator set 48 may comprise a fuel-based generator configured to consume/combust/oxidise a consumable fuel to generate electrical power. The generator set 48 is operatively connected to a fuel supply, for example, a self-contained fuel supply, such as a fuel tank or a pressure cylinder. Typically, the generator 48 provides AC power. In some embodiments, the generator 48 may provide DC power (e.g. via a fuel cell). In some embodiments a DC alternator may be used.

In some embodiments, the generator set 48 is a combustion engine generator. For example, the generator set 48 comprises a conventional diesel generator set, and in some embodiments may comprise a diesel engine having an output shaft which drives a rotor of an electrical generator. The electrical generator and motor are typically co-located and/or mounted to a common support structure, such as a chassis/frame.

Additionally or alternatively, the generator set 48 may comprise a fuel cell 49. The fuel cell is configured to oxidise a fuel to generate electrical power (i.e. in a direct fashion). For example, the fuel may comprise hydrogen, carbon monoxide, methane, methanol or other conventional fuel cell fuels. The fuel cell 49 may provide a low power output (e.g. less than the engine generator). In different examples, the fuel cell 49 may be provided as an alternative to the combustion engine generator set, or else the renewable engine generator.

The electrical control system 60 comprises a controller provided as one or more processor or logic circuit in communication with the sensors described herein and arranged to output control signals to the various electrical components of the electrical system. The control system 60 is referred to as an intelligent load management system.

The electrical control system may also comprise a fuse box, e.g. comprising one or more conventional fuse/trip-switch for selectively denying power to one or more electrical components, e.g. in response to an electrical fault. The control system may further comprise a set of electrical switches under the control of the controller, e.g. switches for each electrical circuit connected to the electrical system.

The electrical control system may also comprise one or more power converter, e.g. an inverter for running AC appliances from the energy store, as will be described below.

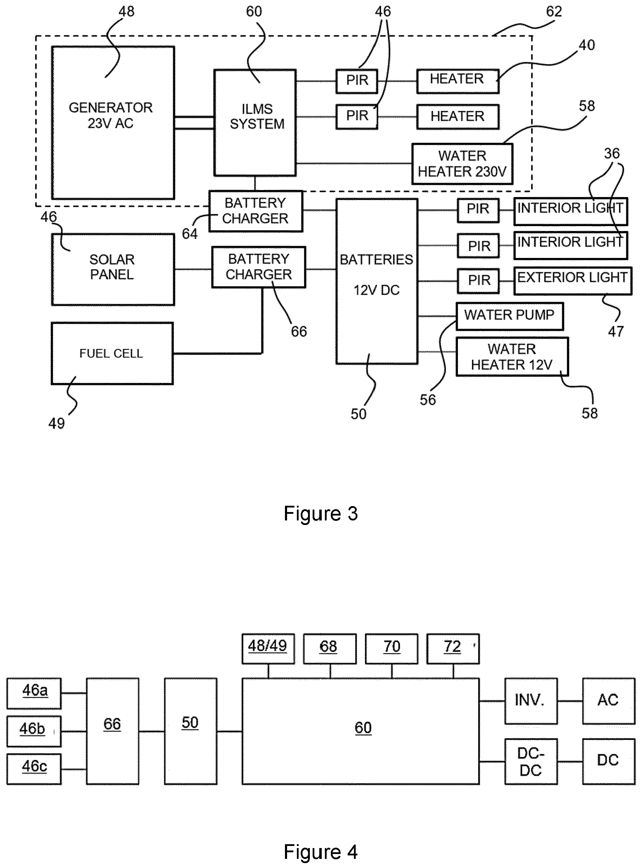

An overview of the electrical system for the cabin 10/100 is shown in Figure 3. The electrical system comprises AC and DC systems/circuits. The AC system is designated by the boundary 62. The AC system comprises the AC generator 48 and an AC-DC converter (e.g. rectifier) 64 that may be provided as part of a battery charger. The AC system could also comprise one or more air heater 40, although this is typically not needed. In general, AC power is provided by the generator.

Where present, one or more wind turbine may form part of the AC system, i.e. generating AC power, and may be connected to the batteries by AC-DC converter 64. Charging of the batteries may be controlled by the controller 60. The wind turbine may also comprise a brake, e.g. under the control of the controller 60, such that generation by the wind turbine can be eased by the controller (i.e. preventing rotation of the turbine) when the batteries can accept no further charge.

Where present, the fuel cell 49 may form part of the DC system (i.e. the generator set 48 or a portion thereof is operatively connected to the DC system).

The AC system may be a 230V system and/or the DC system may be a 12V, 24V or 48V system. However alternative voltages may be provided to suit local requirements in different countries, e.g. on the understanding that the DC system will be of lower power rating than the AC system.

A DC-AC converter/inverter may also be provided as part of the power control system. In some embodiments, an inverter may be used to covert DC power from the batteries, renewable energy generator and/or fuel cell 49 (where present) to provide power to the AC system.

In the present embodiment, the inverter is "under-rated". The inverter is therefore not sufficiently rated to power all the AC appliances concurrently. For example, the inverter may provide a 3kW output, whereas the sum total of the AC appliances is 10kW. The power rating of the inverter is such that it is sufficient to run the most power-intensive component in the system. The power rating of the inverter may be greater than or equal 1kW; preferably 2kW. The power rating of the inverter may be less than or equal to 5kW.

In various embodiments, the inverter is only selectively activated. For example, the inverter may be powered down entirely, i.e. so that it does not draw power, based on readings of cabin occupancy and/or power demand on the AC circuit.

A water heater 58 may be provided on the AC circuit and/or DC circuit. In this example both an AC and DC water heaters are provided and the controller 60 can switch either/both on/off as required. Those water heaters may allow for different power output, e.g. to permit different rates of heating such as instant and/or longer term hot water heating for a hot water tank. In this regard, the cabin 10 may comprise a hot water tank, i.e. separate to the fresh water tank 52.

Although not shown in the figures, it will be appreciated that a hot water tank, or instant hot water heating system, will comprise a water temperature sensor in communication with the controller 60. The current temperature reading can be used to determine whether the water temperature is acceptable (i.e. to prevent overheating and/or to alter the priority of water heating within the control logic).

The solar panels 46 and battery bank 50 are connected to the DC circuit. DC power is thus generally provided by the battery 50. The DC output of the solar panel 46 can thus be used to charge the battery 50 via a battery charger 66. The battery charger 66 comprises a charge controller, e.g. to monitor the level of charge on the battery and selectively disconnect the battery when a maximum charge level is reached. The battery charger 66 may optionally comprise a DC-to-DC converter/regulator.

The appliances connected to the battery on the DC circuit comprise: the interior 36 and/or exterior 47 light(s); the water pump 56; DC sockets (such as USB/charging sockets); and, optionally, a DC water heater or DC generator if used.

In the example of Figure 3, each of the lighting and space/air heating appliances could be controlled at least in part in accordance with the output of the one or more motion/proximity sensor 46. Each appliance is shown in Figure 3 schematically as being connected to the system via a PID sensor.

In some embodiments, one or more instantaneous water heater(s) is provided for the wash basins or sinks 28. An individual electrical water heater may be provided for each sink 28 in the cabin. In other embodiments, an electric heated water storage tank may be fitted in order to provide the hot water for the hand wash sink(s) 28. The sink 28 is fitted with non-concussive taps 30 so that water usage is kept to a minimum. The hot water tank would be managed by the controller 60 so that it is kept topped up and only heated when necessary. A water level and/or temperature sensor may be provided in communication with the controller 60 for this purpose. The control system may be configured to prevent frost damage, e.g. by monitoring water temperature against a minimum threshold temperature (i.e. above freezing) and using a small amount of power to maintain a temperature within the water system.

The system may detect whether a user (e.g. a person) is inside the cabin. For example, the cabin may comprise an infra-red sensor. If a user is not within the cabin, then the water heater may be deactivated to save energy. The heater may be deactivated after a predetermined period of time. For example, the heater may be deactivated after 1 minute, 5 minutes, 10 minutes, 30 minutes, or 60 minutes. When a user enters the cabin, the heater is re-activated accordingly.

The pressure for the water taps may be provided by an accumulator to store pressure. When the pressure drops the control system 60 will run the water pump 56 until the pressure reaches the desired level. A water pressure sensor may be provided in communication with the controller 60 for this purpose.

The toilet 32 flush system is designed to only use a small amount of water per flush. This reduces the waste tank 54 capacity required to prolong the duration between service visits to empty the tank. The water pump 56 will only run when required by the toilet flush or to top up the water tank or accumulator. In some embodiments, the water pump may be deactivated as described in relation to the water heater.

In some embodiments, the cabin is configured to collect rainwater. The cabin comprises a system to collect rainwater from the roof. Typically, the roof is sloped or otherwise angled such that rainwater flows toward one or more collectors. The water may then be stored and/or integrated into the water system as described above (e.g. in the fresh water tank 52). The system may use a guttering/downpipe arrangement, or the collector could be integrated into the roof.

The rain water may be processed to at least partially render the water safe for use (e.g. may not provide drinking water, but water suitable for washing etc.). The decontamination system may comprise one or more of: a filter (e.g. particulate and/or reverse osmosis); a chemical filtration/biocidal system; UV biocidal system; bacterial membrane filter; or other suitable mechanism. In some embodiments, the water may be sufficiently processed to provide potable water. Processed water may then be deposited into the water tank 52.

Any excess water (i.e. water that cannot be adequately stored or processed) may be discarded. Typically, the system is configured such that excess water will overflow the collector and either collects on the roof or is discharged onto the ground.

The cabin may comprise a "grey water" system. The grey water system collects water that is used by one system and uses the same water to provide for a second system. For example, water collected from one or more sinks in the cabin (in the WC or kitchen). The water is stored in a grey water tank. The grey water may then used to flush the toilet instead of using freshwater from the tank.

The grey water tank is fitted with sensors to determine the level of water therein. If the level drops below a predetermined threshold, water from the freshwater tank is introduced into the grey water tank. Water from freshwater tank may increase until the water level reaches a "high level". The "high level" volume is set such there is still some available capacity in the freshwater tank from future hand washing (i.e. the system ensures sufficient water remains in the freshwater tank). The grey water tank is fitted with an overflow that feeds directly into the waste tank for when there is more water collected (e.g. from handwashing) than is required (e.g. to flush the toilet for prolonged periods).

The lighting inside the cabin is low voltage DC LED lighting consuming minimal power, it is controlled so that it only illuminates when there is someone present (according to the output of sensor 38 or a door opening sensor) and there is insufficient natural light (according to a comparison of the output of sensor 42 with a minimum threshold value of ambient light). The control system may also switch off the internal light after a set time of operation to conserve energy, e.g. a period for which the presence of a person within the cabin is not detected.

Natural light may be provided inside through the use of the optional skylights described above. This eliminates the need for internal electric lighting during most daylight hours.

The external lighting is low voltage DC LED lighting consuming minimal power, it is controlled so that it only illuminates when there is someone present and there is insufficient natural light (i.e. determined according to the relevant sensor outputs in a manner akin to the internal lighting control). The control system also turns it off after a set time to conserve energy.

Personnel/space heating is controlled so that it only operates when the ambient temperature is below a predetermined threshold and someone is present. Thus an ambient temperature sensor may be provided inside the cabin and may be used by the control system in conjunction with one or more personnel sensor described herein to control operation of the heater 40 automatically. The heating will turn off once there is no longer anyone present in the cabin. The heating can be DC or AC (e.g. 12V or 230V). If the heating is 230V the power could be provided from the DC energy store via an inverter for a more-limited period of time. The heating may be provided by an electric, resistive element (e.g. including a fan) heater or infra-red heating panels. An electric heat exchanger style air heater may be used, e.g. akin to air conditioning units due to its potential efficiency. This could run from the battery. In some examples, a diesel powered heater could be used, e.g. in conjunction with a particulate filter in the exhaust path to mitigate emissions.

In use, the power for the electrical system is stored in the batteries 50, which are charged up predominantly by the solar panel(s) 46 and/or wind turbine(s), e.g. fitted to the roof and/or side of the WC cabin 10. The batteries are most likely Lithium-ion batteries, but lead acid or gel batteries may be used in the same way only with a reduced power density. Any conventional electrical energy store could be used.

If for any reason the battery charge level drops too low the load is switched off by the controller 60 to prevent the batteries being deep discharged. A dedicated load shedder could be fitted to the batteries in other examples, if desired.

The charge on the battery 50 is used to power the electrical system. The system can operate for extended periods of time via the battery bank 50 alone, i.e. being charged by the available renewable energy generator. This is best shown in Figure 4, where the connection of the different components into the control system 60 is shown. Different renewable energy sources, designated as solar panel(s) 46a, wind turbine(s) 46b and hydropower 46c can be connected to the battery pack 50 each by a suitable charge controller 66.

The control system 60 monitors the charge level on the battery pack 50 and controls delivery of power to the AC and/or DC circuits. The control system 60 monitors the load on the AC and/or DC circuits and operates according to control algorithms as will be described below.

The electrical system is managed with an intelligent load management system that is configured so that when more appliances are being asked to run than there is available power (e.g. based on current and/or predicted energy store levels) then the load management system may limit the maximum power supply to the electrical system. To this end, the appliances may be supplied/denied power in order of a specified priority.

The control system 60 comprises a microprocessor, such as a programmable circuit board or programmable logic device. In any examples of the invention, the battery or other electrical energy store may comprise one or more sensor indicating the current level of charge and/or available capacity for energy storage. The sensor output is communicated to the controller such that it can be accommodated in power supply decisions made by the controller.

The controller in presently preferred embodiments is pre-programmed with a prioritisation algorithm which dictates a preferential supply of power to certain appliances over others.

Each electrical load/appliance may thus be given a ranking of 1-n, where 'n' is the number of electrical appliances connected to the electrical system. Using this technique, each appliance has a ranking that can be used to determine which appliance(s) should be powered in the event that it is not possible to supply power to meet all the instantaneous or planned electrical loads on the system.

Appliances may be managed generally by the controller in the various orders of priority, such as:
- Interior lighting
- Water heating (e.g. instantaneous or storage vessel)
- Kettle/microwave or other cooking appliance
- Air heating
- Refrigerator
- Power sockets, which may be low power (e.g. USB) and/or high power.
- Sterilization water filter (e.g. UV filter)
- Hand drier and/or air dryer
- Pump for the water system

Different hierarchies can be drawn up according to the intended use of the cabin.

The controller 60 comprises one or more routine/algorithm to determine whether the level of charge on the battery and the concurrent power suppled form the renewable energy source is sufficient to meet the electrical demand on the system. The control system may check the instantaneous power supplied by the renewable energy source(s) 46 to determine whether the demands of the concurrent electrical loads on the system can be met by the combined power supplied by the renewable generator(s).

The controller 60 may monitor the current rate of charge on the battery and the current rate of discharge from the battery to meet the electrical demands of the connected appliances. Thus rather than monitoring the renewable energy generator(s) output per se, the controller could simply monitor the charge level on the battery and/or the rate of charge/discharge from the battery. In this regard, the controller may only need to receive the relevant sensor inputs (being indicative the appliances to be activated) and the level of charge on the battery in order to make instantaneous power supply decisions.

This provides a simple but highly effective and efficient control strategy. In a simple example, this may involve monitoring the rate of depletion of the charge on the battery 50 and sending an alert signal or denying power to certain appliances whenever the charge on the battery 50 drops below a minimum threshold and/or the rate of depletion in charge level on the battery is greater than a maximum threshold.

The electrical system is configured to ensure the power drawn through the inverter is less than or equal to the rated power (i.e. to prevent overloading thereof). In the event the total power demand through the inverter (e.g. on the AC circuit) exceeds the power rating thereof, the system is configured to selectively deny power to one or more appliance such that the power demand is less than or equal to the power rating of the inverter. Additionally or alternatively, the controller may selectively start a generator or backup power source to supply power without the need to prevent exceeding the rated power of the inverter, The system may operate in a similar fashion to described above and like features will not be repeated for the sake of brevity.

Each appliance is assigned a priority rating. The system is configured such a lower priority appliance is selectively denied power over a relatively higher priority appliance. Further appliances may be selectively denied power until the demand is less than or equal to the rated power.

In some embodiments, the power demand through the inverted may be reduced to a set point (i.e. threshold) below the rated power. This may help to protect the inverter from being over-powered, for example, during a power fluctuation. The set-point may be 80%; 90% or 95% of the rated power of the inverter.

Power to or through the inverter may be reduced or prevented (i.e. the inverter may be electrically isolated in one or more conditions. The conditions may include where a user is not detected within the cabin. This helps to reduce power consumption. The system may operate insubstantially the same way as the as the water heater system previously described. The cabin may comprise infrared or other suitable motion sensors. Power to the inverter may be reduced/prevented after a predetermined period of time. For example, the inverter may be deactivated after 1 minute, 5 minutes, 10 minutes, 30 minutes, or 60 minutes. When a user enters the cabin, the inverter is re-activated accordingly.

A similar regime may apply to one or more appliances in the cabin. The appliances may be deactivated according to a priority ranking. In some embodiments, only a select portion of the appliances are deactivated (e.g. appliances that are not need when a user is not present). For example, lights, heater and/or power sockets may be deactivated. In some embodiments, all the appliances may be deactivated. All the appliances may be deactivated after a predetermined period of time (e.g. after 1 hour of no occupancy) indicative of an end of a working day or other working period (e.g. overnight). In some embodiments, the appliances may include any monitoring and/or control system (e.g. for the electrical and/or water system). The system as a whole therefore only operates the minimum number of appliances/systems required to reactivated the system or other appliances.

Isolation of the inverter may be performed using a controller comprising one or more of: a relay; a current sensing relay; a programmable logic circuit (PLC); and/or artificial intelligence system. The controller may be integral with the inverter and/or form part of an overall power management system.

In some embodiments, if the power demand from the appliances exceeds a predetermined demand and/or the battery falls below predetermined level, the renewable energy device may be deployed. Typically, the solar panels will be moved from the stowed/folded state to a deployed state. In some embodiments, the system may comprise a means to effect movement of the solar panels to the deployed state. For example, a motor, linear actuator, winch or the like may move the panel to the deployed state. A hydraulic or electric actuator could be used. The solar panel may, for example, be configured to automatically change angle to receive optimal sunlight and/or track the sun.

In some embodiments, the system may be configured to provide an alarm to send an alert to a remote device (e.g. a mobile phone) in the event the appliances exceeds a predetermined demand and/or the battery falls below predetermined level. The user may then manually move the solar panels to the deployed state either fully manually and/or with the aid of manually operated mechanical actuators.

However, it has been found that the above regime may lead to a highly intermittent power supply to the cabin and ongoing inhibition of power to many appliances. Accordingly it is proposed to add predictive capability to the control system 60 to better manage peaks and troughs of renewable energy supply against the peaks and troughs of electrical system demand. In general terms, this is achieved through:
(1) profiling of electrical demands for the system as a whole and/or individual electrical alliances; and,
(2) receiving forecasts of environmental conditions that affect renewable energy generation.

The profiling of electrical demands, at least in part, takes the form of scheduling periods of usage and non-usage of the cabin. When a cabin is deployed to a site, or in advance of a planned deployment, an operator may input the intended operational schedule for the cabin in terms of working and non-working days and/or the hours of each working day for which the cabin is to be used. The operational schedule preferably extends at least 1, 2, 3 or 4 weeks into the future such that there is a predictable plan for cabin usage.

Even using this basic information an initial profile of energy usage for the cabin can be implemented based on historic knowledge of similar cabin types or the same cabin used in different/previous locations. For example, a basic or generic profile of power consumption by the cabin electrical system as a whole can be established by the control system showing a non-constant power usage over the working day (usage hours) and/or a minimal power consumption over non-usage time periods. For example, power usage during working hours may show initial peaks at the start of a shift and during break/meal times as well as an ongoing background usage for lighting, space heating, water pump, water heating, hand drying, etc.

The number of cabin occupants may also be input during setup to contribute to the predicted profile of power consumption for the cabin. A greater number of occupants may imply more frequent use of certain appliances and/or a larger number of concurrent electrical appliances being used.

The number and type of electrical appliances making up the electrical system (e.g. including AC and/or DC appliances) may also be logged by the control system, along with the associated power rating. In this manner, the overall electrical system demand can be constructed from the summation of the individual power profiles of the various electrical appliances on the system. An example is shown below, which includes the days and hours of use along with the associated electrical appliance hierarchy and normal usage data:

**1 Days and hours of use**

| | MON | TUE | WED | THU | FRI | SAT | SUN |
|---|---|---|---|---|---|---|---|
| Start | 08:00:00 | 08:00:00 | 08:00:00 | 08:00:00 | 08:00:00 | 08:00:00 | 08:00:00 |
| End | 17:00:00 | 17:00:00 | 17:00:00 | 17:00:00 | 17:00:00 | 16:00:00 | 13:00:00 |
| Hours | 09:00:00 | 09:00:00 | 09:00:00 | 09:00:00 | 09:00:00 | 08:00:00 | 05:00:00 |

**2 Appliance list**

| Priority No. | Appliance Name | Power rating | Hours use per day |
|---|---|---|---|
| | | kW | Hours |
| 1 | Interior lighting | 0.25 | 12 |
| 2 | Hot wash - Toilet | 3.00 | 0.5 |
| 3 | Hand dryer | 0.20 | 0.5 |
| 4 | Hot wash - Canteen | 3.00 | 0.5 |
| 5 | Kettle | 2.20 | 0.5 |
| 6 | Microwave | 1.00 | 1 |
| 7 | Office socket - Laptop | 0.25 | 8 |
| 8 | Office socket - Printer | 0.80 | 0.5 |
| 9 | Exterior lighting | 0.25 | 2 |
| 10 | USB sockets | 0.20 | 1 |

Using this information, the controller can move away from a simple instantaneous control logic to a predictive control logic that aims to satisfy the power requirements for a scheduled time period, such as a period of one or more days. The controller may aim to satisfy a rolling time period of a plurality of days such as two, three, four, five or more days. Predictive scheduling for a time period of two or more days allows better accommodation for the varying day-night cycle of renewable energy generation.

The individual electrical appliance profiles, and/or the total electrical system profile, may be plotted on a timeline.

The controller 60 is thus programmable to recurring schedules or other predictable or cyclic events/behaviour. For example schedules may be used to follow trends in energy consumption and/or renewable energy availability. Daily, weekly, monthly and/or seasonal schedules may be used. For example, it may be assumed that the cabin may not be used overnight or at weekends in some instances of use and so a low level of charge on the battery may be sufficient. However scheduling of energy consumption may imply that high levels of energy consumption are expected during the working hours of a morning/afternoon. As such the renewable energy generator(s) may be sufficient to top up the battery over a weekend, implying that the generator set is not required to be used merely because a low charge level exists on the battery at the start of a weekend. Environmental condition forecast data may be received by the control system through a suitable subscription service, e.g. via an API. Data may be received over a conventional wired or wireless signal connection, e.g. satellite and/or mobile telephony networks. The control system may have a SIM card and receiver circuit to this effect. Certain environmental condition data may be logged for the control system well in advance, e.g. daylight hours, such that it does not need to be transmitted to the control system.

The received environmental condition data, e.g. weather forecast data, are used to indicate when renewable energy may be sufficient to meet demands in advance. The environmental condition data may be specific to a given location (e.g. GPS location) of the cabin on-site. The data may comprise any, or any combination of: daylight hours; ambient temperature; ambient light level (sunlight/cloud-cover); precipitation/humidity data; and/or wind speed.

The location of the cabin (latitude and longitude) may be manually entered or else may be tracked by the control system, e.g. via GPS, and sent to the subscription service to obtain data applicable to the current cabin location.

Based on the received data, the controller determines an energy generation capability of the renewable energy generator(s) 46 for a scheduled time period. Like the energy demand of the system, this is determined as a varying profile over the time period based on the varying environmental condition data. This can be plotted on a timeline.

For a predetermined time period the controller can thus take the current level of charge on the battery bank 50 and can plot both the supply to the battery as well as the demand/drain from the battery using the combination of renewable energy generation profile and the energy system demand profile described above. The controller can thus determine whether a minimal battery charge threshold will be met at any time during the predetermined period. Typically the time period will be a rolling period such that the controller repeats this determination at ongoing time intervals. The intervals are preferably less than a day or half-day and may comprise hourly or part-hourly updates. The intervals may be fixed or dynamic, e.g. updating more frequently during higher power usage periods. The intervals may be based upon charge/discharge rate of the battery. The interval could be set to the frequency with which environmental condition data is updated. If the scheduling process by the controller reveals that all predicted energy demands can be met by the renewable energy generation, the controller may enact a normal scheme of operation for the electrical system in which power is supplied to all electrical appliances when needed.

In the event that the controller determines that the battery will discharge to an unacceptable level (i.e. beyond a minimum threshold) at one or more point during the scheduled time period, the controller may determine the level of intervention needed to avoid crossing the relevant threshold. This may involve denying power to one or more electrical appliance for a period of time according to the control hierarchy. Additionally or alternatively, this may involve outputting an alert signal to an operator of the cabin indicating that a power demand may not be met. The signal may be a message to a portable communication device of the operator and/or an information system within the cabin, e.g. a screen or similar indicating scheduled periods of power availability for different appliances.

A remote cabin operator may receive the alert on a computing device and may log the alert or else control operation of the cabin remotely, i.e. approving or denying the intended control system measures.

Where the charge on the battery pack is insufficient, any backup power source 48, 68, 70, 72 could be connected/used to supply power to the system. Those backup options comprise an internal generator set 48, external generator set 68, grid power supply 70 and/or external battery pack 72. Any, any combination, or all backup options could be used where needed, although in many examples, e.g. in systems where fewer or lower-power electrical appliances are used, the backup options could be negated altogether, or used in an ad-hoc fashion where an alert is sent out by the control system 60.

The control system 60 monitors and manages the battery charge level and, if insufficient charge is created from the renewable energy sources, then the batteries 50 can be topped up with power from the backup source. If the battery charge level drops below a certain level (i.e. a minimum threshold) the backup source can automatically be switched on and operated until the batteries are sufficiently/fully charged.

A fuel cell 49 may be used to trickle charge the battery, due to the relatively low power output of the fuel cell. This allows the battery to be charged without stressing and/or overheating the battery. The fuel cell 49 may be used to charge the battery in addition to or in lieu of the other optional backup power options, or could be used alongside the renewable energy generator as a longer term solution with minimal maintenance needs.

AC power may be provided through the use of a small diesel generator 48 (where used) so that fuel usage is kept as low as possible. This will result in the generator being unable to power all the connected appliances concurrently (e.g. the space heater(s) 40, water heater 56 and/or battery charger), ensuring that the generator 48 is not run in low loading scenarios that could lead to coking issues over time.

The controller may check the availability of one or more backup power generator/supply. If a supply is connected, the controller may proactively charge the battery pack to the required level and/or may await the relevant time period before reactively commencing charging of the battery pack. For each backup power source, the controller may have a log of the battery charging rate achievable using that source. In the event that no backup power source is connected, the controller may alert an operator, e.g. in advance, that charging of the battery will be required by a certain time. This may allow an operator to make a backup power source available (e.g. an external generation source) to prevent any power denial by the control system.

When scheduling power denial to electrical appliances according to the control hierarchy, it is to be noted that the hierarchy may not be static. That is to say each appliance hierarchy may be a variable that follows a hierarchy profile based on one or more condition. Interior or exterior lighting for the cabin may have a higher priority level during night time and a lower priority level during daylight hours or sufficient ambient light levels. Cooking facilities may have a higher priority level during break/meal times and a lower priority level during core working hours. Various different priority level profiles are different for different appliances.

The hierarchy may be implemented by rank ordering of electrical appliances or else by scoring of the priority level.

When denying power to appliances, the controller may apply a maximum power saving scheme (e.g. using a power rating hierarchy) and/or a human necessity prioritisation scheme (e.g. using a health and safety hierarchy). Certain health and safety risks will typically be deemed critical such that certain appliances must be powered for the electrical system and cabin to remain in operation.

Use of scheduling of energy consumption and/or renewable energy availability may further increase the efficiency of the system. Scheduling may be pre-programmed at least in part, e.g. requiring an operator to input the intended days/hours of cabin usage on site to set the system and/or relying on predictable environmental data such as daylight hours and/or ambient temperature. Additionally or alternatively, scheduling may be adaptive, e.g. based on records of energy consumption and/or environmental data in a preceding usage period. It is envisaged that the system will start initiate in a pre-programmed manner using stored generic profiles for the electrical system. However the system may learn over time from the logged power usage for the system as a whole or for individual electrical appliances and may adjust the pre-programmed profiles according to the learned data.

The system also allows for numerous improved reporting and control options for the user/operator. In any examples of the invention, the system controller 60, or another data controller of the system, may transmit data relating to the cabin electrical system to a remote server or facility for access by individual users. The data may be accessed or transmitted to users having management/monitoring privileges. Such users may access the data and information/reports using any suitable conventional computing devices, such as PCs, laptops/tablets, mobile phones, and the like. The user may access any or any combination of the following information in the form of numerical data entries, charts/graphs, reports or alerts (e.g. when one or more threshold criterion is met):
- Battery levels
- Daily/hourly power gained from solar panels
- Daily/hourly power gained from the wind turbine(s)
- Daily/hourly power generated from the diesel generator or external power source.
- Daily/hourly power consumption of the cabin
- The usage of each electrical item, time of day used, duration it is used for and/or how much power it consumed.

A current and/or historical report may identify each electrical appliance and its availability status, e.g. whether it is available for use or whether it has been 'disconnected' due to one of the low charge level limits of the battery.

The same sort of communication facility for users may allow transmission of user settings/instructions to the system, e.g. allowing a managing user to set one or more energy usage threshold for the cabin and/or individual appliances or appliance types. For example a user could set times of the day in which certain appliances can be used, hourly/daily/weekly usage or energy consumption limits and the like. This functionality may be used during setup of the cabin ready for use, e.g. in advance, or else during use of the cabin, e.g. in reaction to cabin operation, weather conditions and/or the availability of another electrical energy source.

Where a backup power source, e.g. generator set, is provided that has a known maximum power threshold below the total electrical demand of the system, the controller 60 will operate to remove supply of electrical power to one or more of the electrical loads until the electrical power in use by the electrical loads is lower than the maximum power threshold.

Operation of the welfare cabin control system in such a manner means that the power threshold of a generator set 48 only has to be large enough to enable operation of the essential electrical appliances, since concurrent operation of more electrical loads will result in operation of the controller 60 to selectively remove and/or switch supply of power to the more important electrical loads in the hierarchy until the total power rating of the electrical loads in concurrent use is achievable. This means a smaller engine generator set may be selected so as to ensure that the engine is normally operating at a non-idle throttle/rpm setting when in use. A desirable range of engine operation or fixed operating point for the engine/generator may be set. In a specific example, the engine will run at 3000 rpm. This can carry significant efficiency and/or other practical benefits for the engine.

The use of fuel cell provides a quiet and low maintenance source of the electrical power. The fuel cell allows the use of renewable and/or clean fuels (e.g. which only exhaust evaporated water). Additionally, the fuel cell provides a low power output to allow efficient trickle charging of the battery. This is well suited to the predictive control strategy described herein so that a fuel cell backup generator can be started long enough in advance to ensure the advance charge on the battery is sufficient for uninterrupted energy supply to meet the variable electrical loading during usage periods.

Whilst the above description refers to a solar panel as providing a renewable energy source, it will be appreciated that other renewable energy sources can additionally or alternatively be used, including for example a wind turbine or water wheel. Depending on the renewable power supply, additional or alternative power converter means may be implemented as would be understood by the person skilled in the art.

In general, batteries, and in particular, lithium based batteries have reduced performance at lower temperatures (e.g. lower than 5°C). For example, charge capacity and/or charge rate may be reduced at such temperature. A heater may be provided to heat the battery. In the present embodiment, the heater comprises a heating element. The element is provided on or in proximity to the battery.

The battery may be provided in an enclosure. The enclosure is thermally insulated. The thermal insulation may be provided in suitable form, for example, using wool or foam. The heating element is provided on or within the enclosure to provide heating thereof. The enclosure may be closely sized to the battery (i.e. the enclosure is approximately the same size as the battery). In other embodiments, the enclosure may be oversized relative to the battery. For example, the enclosure may provide a room or the like accessible to a person.

In some embodiments, the enclosure may comprise cooling apparatus. This may help to prevent overheating of the battery. The cooling apparatus may comprise a passive device, such as a heat sink or the like. In some embodiments, the cooling apparatus comprises a fan. In some embodiments, the cooling apparatus comprises a refrigeration system.

Usage of the battery (i.e. charge or discharge thereof) may be prevented is the temperature of the battery is above and/or below a predetermined temperature. The battery and/or the enclosure comprises a thermometer (e.g. a thermocouple) to determine the temperature thereof. In some embodiments, the temperature of the battery may be estimated. The external environmental conditions may be used to estimate the approximate temperature of the battery. For example, if the temperature outside the cabin is below a threshold temperature, then the battery may be deemed below a threshold temperature accordingly. The battery system may use the aforementioned environmental condition forecast data to estimate the battery temperature.

In the present embodiment, usage of the battery is prevented if the temperature of the battery is below a predetermined temperature. The temperature may be less than or equal to 10°C; preferably, less than or equal to 5°C; preferably, less than or equal to 2°C; preferably, less than or equal to 0°C.

Charging of the battery only occurs when the battery is above the predetermined temperature. The generator set therefore does not run and/or charge the battery when the battery is below the predetermined temperature. If the temperature of the battery is below the predetermined temperature, then the heating system heats the battery to a temperature equal to or above the predetermined temperature. The heating system may then maintain the battery at a temperature equal to above the predetermined temperature. The heating system may operate continuously (i.e. at a fixed temperature) or intermittently. The heating system operates automatically to ensure the correct battery temperature is achieved. The heating system may therefore may not operate when the battery can maintain the correct temperature (e.g. due to external environmental conditions). The heating system maintains the temperature in real-time. In some embodiments, the system may operate only at predetermined times. For example, the heating system may operate overnight or in the mornings when temperatures are lowest. In other examples, the system operates in daylight hours only to allow charging, e.g. when the level of charge has dropped at night.

In the present embodiment, charging is prevented completely when the battery is below the predetermined temperature. In other embodiments, charging may be limited (i.e. current/power may be limited to predetermined value). In some embodiments, the charging may be limited in a staggered or phased fashion. For example, at 0°C charging is prevented; at 5°C, 30% charging capacity is permitted; at 10°C, 60% charging capacity is permitted; and so on.

If the battery, is at or above the predetermined temperature (either via environmental conditions or the heating system), then charging may proceed as previously described. In some examples, it has been found that discharging of the battery slightly can be used to generate heat needed to warm the battery for charging.

In some embodiments, charging or discharging may be prevented or limited when the temperature greater than or equal to a predetermined temperature. This may help to prevent overheating of the battery. The cooling system (e.g. a fan) may be activated to reduce the temperature of the battery. Usage of the battery may therefore be prevented when the battery it outside a predetermined temperature range.

The heating and/or cooling system may only be used in selective conditions. The heating and/or cooling system may only activate when a demand to charge and/or discharge the battery is required. For example, when the system is not in use, the battery may be allowed to cool to any temperature. If a demand is provided, the heating and/or cooling system may activate accordingly. The demand may be automatically generated by the system, e.g. according a usage schedule or according to an immediate usage demand (i.e. an appliance is activated). In some embodiments, the demand may be manually initiated. For example, the user may manually initiate a start-up procedure to ensure the system is ready for use.

Once the battery is an at the desired temperature or temperature range, the battery may be discharged/charged as required. Typically, the heating/cooling system may take some period of time to heat/cool the battery to the desired temperature/range. Thus, there is typically a delay in generation of the demand, and allowing of charging/discharging the battery. The generator is thus programmed to accommodate such a delay to charge the battery accordingly. The system will typically send a signal to the generator to being the charging sequence once the preferred temperature is reached. Where cooling of the battery is required, power to one or more appliances may be reduced or prevented in as described above.

In general terms, the heating/cooling system is only operated when the battery is outside the predetermined temperature range. Additionally, the heating/cooling system is only operated when there is demand for charging/discharging. The heating/cooling system therefore only operates when necessary.

The system is operatively connected to a remote control/computing device. The remote device may comprise one or more of: a mobile phone; a laptop; a tablet computer; remote server etc. The system may communicate to the device via any suitable means, including a LAN (e.g. Wifi, Bluetooth (RTM)) or WAN (e.g. the Internet). The system may send notifications or data to the device. The remote device may comprise an app or other suitable software to view the data or notifications thereon. The notification/data may comprise one or more of:
- A battery charge level and/or charging/discharging rate. The system may notify the remote device in the event the battery falls below a predetermine charge level.
- A location of the cabin. The cabin comprises a location system (e.g. GPS). The system may notify the remote device in the event is outside a predetermined location or area (e.g. outside a geofenced area). The location may be viewable on a map.
- Whether one or more component of the system is powered down. For example, whether the water heater and/or inverter is powered down due to the absence of the user. The system may notify the remote device when a user is detected and/or when an absence of a user is determined.
- Current power and/or total charge (e.g. over the day or hour-by-hour) generated by the renewable generator and/or fuel generator.
- Fuel generator condition/operating parameters (e.g. RPM) and/or fault information.
- Power usage on the AC and/or DC circuit.
- Water levels and/or water usage in the freshwater, waste and/or greywater tank.
- Fuel level and/or fuel usage.
- Electrical diagnostics and/or conditions of the system.

The remote device may be used to set and/or modify one or more parameter/threshold (i.e. setting) on the system. The parameter/threshold may comprise one or more of:
- An upper and/or lower threshold for the battery charge level on which the fuel generator is deactivated/activated.
- A "quiet" time period when the generator is prevented activating (e.g. to reduce excessive noise).
- An upper and/or lower threshold for any of the water, waste or fuel tank level.
- The geofence location/area
- The inverter power-rating threshold level.
- The heat/inverter deactivation time after a user is not detected.
- The battery temperature threshold point/range (i.e. the point at which the heating/or cooling activated/deactivated).
- The priority rating of an appliance.
- Criteria for notifications/alarms and/or users who alarms/notifications are sent to.

The remote device may be configured to issue one or more command to the system, for example:
- To activate/deactivate one or more generator (e.g. the solar generator or fuel generator). For example, the fuel generator may be deactivated such that the system uses battery only (e.g. until the battery is completely depleted).
- To activate/deactivate the inverter and/or water heater.
- To activate/deactivate one or more appliance,
- To stow/deploy the solar generator.

A similar control unit may be provided on or within the cabin itself to allow modification, notification or command issuance as described with reference to the remote device. The control unit may comprise a display and/or input controls (e.g. a touch screen).

The control system described herein is better able to manage the power harvested from renewable sources and its use. It can manage power outputs so that the power storage system is never fully depleted, or only depleted if a manual override is activated due to the user having means of recharging the system from a backup source.

Depending on the calculated battery levels over the next x number of days the controller may restrict certain appliances from running in order to save the power for the more critical appliances and ensure the batteries do not get completely depleted. In the case of a welfare cabin items that will be switched off first will be ones that are not required by law for the site to run.

The control system may also allow more optimal/efficient use of the available renewable energy generation capacity. For example, the controller may allow the energy reserves in the batteries to become depleted to a greater extent if it can be forecast that there will be sufficient renewable energy generation capacity in time for the next instance of use. This can avoid renewable energy generation capacity being wasted, e.g. once the batteries are already fully charged.

To further improve the predicting side of the system, it could also have an API link to historical weather data and compare this to actual power generated from the renewable energy generator(s) to adjust the figures for the future. It would also know from historical data the power used in the day and therefore recalculate the battery level predictions based on historical data rather than the initial predictions set at the factory. Looking at the historical data would make the system more accurate as all sites would consume power in a different way. Also the positioning of the unit could be factored in since, although the weather may be constant, the actual power gained could be lower or higher than predicted because the cabin's precise position, e.g. being shadowed by tall buildings or trees, sheltered from certain wind directions or exposed to higher wind speeds due to funnelling or similar local variations.

The system monitoring system can log the usage of all the appliances fitted in the cabin. The user would then know the frequency, the duration and the time and day of each appliance being used. Any suitable report of compliance could be generated. Also the system can be used to log faults quickly due to changes in operation of appliances.

The use of an under-rated inverter reduces weight, size and cost of thereof. This further reduces power and heat losses during operation.

## Claims

1. A self-contained welfare cabin having an energy generation system comprising:
an energy store;
a renewable energy generator;
an alternating current (AC) circuit and a direct current (DC) circuit, each of the AC and DC circuit having one or more electrical appliance operatively connected thereto, at least one of said appliances comprising an inverter for supplying the AC circuit from the energy store;
a sensor for sensing one or more operating parameter of the energy generation system; and
a controller configured to control operation of the energy generation system, the controller arranged to selectively permit or deny power to one or more electrical appliance in dependence on the sensor output.

2. A self-contained welfare cabin according to claim 1, wherein the controller is arranged to selectively permit or deny power to the one or more electrical appliance in dependence on a determination of whether the sensed operating parameter meets or exceeds a threshold for operation of the energy generation system.

3. A self-contained welfare cabin according to claim 1 or 2, wherein the inverter comprises a predetermined power rating;
a plurality of the electrical appliances are on the AC circuit, said plurality of appliances comprising a total power rating;
wherein the total power rating of the appliances is greater than the power rating of the inverter; and
the controller is configured to selectively deny power to one or more of said plurality of appliances in the event the power drawn by the appliances is greater than the power rating of the inverter.

4. A self-contained welfare cabin according to claim 3, wherein the controller monitors the active power drawn by the plurality of electrical appliances concurrently and selectively denies power to one or more electrical appliance until the active power drawn is less than or equal to the power rating of the inverter.

5. A self-contained welfare cabin according to any preceding claim, wherein each electrical appliance is assigned a priority rating, and wherein the controller selectively denies power to the electrical appliances in accordance with a hierarchy comprising the relative priority ratings of each electrical appliance.

6. A self-contained welfare cabin according to any preceding claim wherein the controller is arranged to selectively permit or deny power to the inverter in dependence on the sensor output.

7. A self-contained welfare cabin according to any preceding claim, wherein the sensor comprises an occupancy sensor and the controller denies power to one or more electrical appliance either upon or a predetermined time after cessation of occupancy of the welfare cabin sensed by the occupancy sensor.

8. A self-contained welfare cabin according to any preceding claim, wherein the sensor comprises a temperature sensor and the controller is arranged to selectively permit or deny power to one or more electrical appliance in dependence upon whether the sensed temperature is within or outside a predetermined temperature range.

9. A self-contained welfare cabin according to claim 10, wherein the sensor senses a temperature of the energy store and the controller selectively controls charging or discharging of the energy store, e.g. in response to a power demand of one or more electrical appliance, based upon the sensed temperature of the energy store.

10. A self-contained welfare cabin according to claim 8 or 9, comprising a temperature control system arranged to selectively alter the temperature of the energy store if the sensed temperature is outside said predetermined temperature range.

11. A self-contained welfare cabin according to any preceding claim, wherein the electrical appliance comprises a heater.

12. A self-contained welfare cabin according to any preceding claim, comprising a communication interface for operative communication with a remote device, the controller configured to receive commands from the remote device to allow modification of one or more operating parameter of the energy generation system.

13. A self-contained welfare cabin according to claim 12, wherein the controller is configured to deactivate one or more electrical device on the welfare cabin in accordance with commands from the remote device.

14. A self-contained welfare cabin according to claim 12 or 13, comprising a location determination system, and the controller is configured to a receive a location parameter from the remote device, the controller being configured to determine whether or not the location of the welfare cabin is adheres to said parameter.

15. A self-contained welfare cabin according to any one of claims 12 to 14, where the commands from the remote device define a time period in which one or more appliance can or cannot be activated.

16. A self-contained welfare cabin according to any preceding claim, wherein the renewal generator comprises one or more solar collector movable between a stowed position and a deployed position, and in the deployed position and the exposed surface area of the solar collector for energy generation is greater in the deployed condition than in the stowed position, said one or more of the solar collector being pivotably mounted to allow folding of the renewable energy generator between the stowed and deployed conditions and/or adjustment of the angular orientation of the solar collector in the deployed condition relative to the welfare cabin.
